Europäisches Patentamt

European Patent Office

Office européen des brevets

(19)

(11) Numéro de publication : **0 681 245 A1**

(12) **DEMANDE DE BREVET EUROPEEN**

(21) Numéro de dépôt : **95400959.3**

(22) Date de dépôt : **27.04.95**

(51) Int. Cl.$^6$ : **G06F 15/80**

(30) Priorité : **02.05.94 FR 9405324**

(43) Date de publication de la demande :
**08.11.95 Bulletin 95/45**

(84) Etats contractants désignés :
**DE DK FR GB IT**

(71) Demandeur : **COMMISSARIAT A L'ENERGIE ATOMIQUE**
**31-33, rue de la Fédération**
**F-75015 Paris (FR)**

(72) Inventeur : **Herault, Laurent**
**69, Les Hauts de Furonnières**
**F-38640 Claix (FR)**

(74) Mandataire : **Dubois-Chabert, Guy et al**
**c/o BREVATOME**
**25, rue de Ponthieu**
**F-75008 Paris (FR)**

(54) **Procédé et dispositif d'extraction d'un plus grand sous-ensemble d'objets, utilisant un réseau de neurones.**

(57)    La présente invention conceme un procédé d'extraction d'un plus grand sous-ensemble d'objets, en utilisant un réseau de neurones comprenant les étapes suivantes :

— une étape de construction d'un réseau de neurones récursif à partir des objets et des relations entre les objets en associant à chaque objet la sortie binaire d'un neurone formel $p_i(t)$ ;

— une étape d'utilisation d'un procédé d'interruption afin d'obtenir des sous-ensembles d'objets deux à deux non en relation tels que chaque sous-ensemble trouvé ne peut pas être inclus dans un plus grand. On passe d'un sous-ensemble à un autre en essayant d'augmenter sa taille ;

— une étape d'initialisation de la sortie et du potentiel de chaque neurone ;

— une étape d'exploitation dynamique récursive du réseau ;

— une étape de choix parmi les sous-ensembles listés du plus grand par comparaison des tailles.

L'invention conceme également un dispositif d'extraction.

FIG. 1

Domaine technique

La présente invention concerne un procédé et un dispositif d'extraction d'un plus grand sous-ensemble d'objets, utilisant un réseau de neurones.

Etat de la technique antérieure

Les réseaux neuromimétiques ont largement été étudiés depuis plusieurs années et des applications diverses ont été développées, notamment pour la résolution de problèmes d'optimisation et de reconnaissance de formes.

Les réseaux neuromimétiques utilisent une information numérique et sont des systèmes qui effectuent des calculs inspirés du comportement des neurones physiologiques. Un modèle neuromimétique est caractérisé par trois constituants de base: un réseau de neurones formels, une règle d'activation et une dynamique d'évolution.

Le réseau est composé d'un ensemble de neurones formels. Un neurone formel est une unité de calcul constituée d'une entrée, appelée potentiel (noté $u$) et d'une sortie, correspondant à un niveau d'activation numérique (noté $p$). A chaque instant, le niveau d'activation de chaque neurone est communiqué aux autres neurones. Les neurones sont en effet connectés ensemble par des connexions pondérées, appelées poids synaptiques. Le poids de la connexion entre la sortie du neurone $i$ et l'entrée du neurone $j$ est noté $W_{ij}$. La quantité totale d'activation en entrée $u_j$ que le neurone $j$ reçoit des autres neurones à chaque instant est utilisée par ce neurone pour mettre à jour sa sortie. On l'appelle parfois potentiel (ou potentiel d'activation) du neurone $j$.

La règle d'activation d'un réseau neuromimétique est une procédure locale que chaque neurone suit en mettant à jour son niveau d'activation en fonction du contexte d'activation des autres neurones. La sortie d'un neurone est ainsi donnée par une fonction de transfert non-linéaire appliquée au potentiel. Cette fonction non-linéaire peut être une fonction à seuil, appelée aussi fonction de Mac-Cullogh et Pitts, et définie, pour le neurone $i$ considéré à la date $t$, par:

$$\begin{cases} p_i(t) = 1 & si \ u_i(t) > 0 \\ p_i(t) = 0 & si \ u_i(t) < 0 \\ p_i(t) = p_i(t-1) & si \ u_i = 0 \end{cases} \qquad (1)$$

La dynamique d'évolution est la règle permettant la mise à jour des neurones. Au départ ($t=0$), les sorties des neurones sont tirées aléatoirement ( 0 ou 1). Puis le réseau évolue en mettant à jour ses neurones. Pour mettre à jour un neurone $i$ à l'instant $t$, on calcule son potentiel à cette date ;

$$u_i(t) = u_i(t - 1) \ + \ \Delta u_i(t) \qquad (2)$$

La variation de potentiel $\Delta u_i(t)$ va correspondre à la dynamique d'évolution. Différents modèles existent dans l'art connu pour définir cette dynamique. Suivant le signe de $\Delta u_i(t)$ entre deux mises à jour du neurone $i$, on dit que le neurone est inhibé (variation de potentiel négative qui tend à mettre la sortie à 0) ou excité (variation de potentiel positive qui tend à mettre la sortie à 1). Si son potentiel est strictement positif, le neurone met sa sortie à 1: il est activé. Si son potentiel est strictement négatif, il met sa sortie à 0: il est désactivé. Si son potentiel est nul, la valeur de la sortie reste inchangée. Ainsi, la sortie du neurone $i$ peut être amenée à changer entre deux mises à jour. On dit que le réseau a convergé si, pour chaque neurone, aucune mise à jour ne modifie le potentiel du neurone.

Le mode de convergence est défini par l'ordre dans lequel sont mis à jour les neurones. Son choix est de grande importance pour la qualité de la convergence. Le mode de convergence peut être:
- asynchrone: un neurone est mis à jour à la fois. La nouvelle sortie calculée lors de sa mise à jour sert à la mise à jour des autres neurones. Les neurones peuvent être mis à jour séquentiellement dans un ordre fixé (on parle de mode asynchrone séquentiel) ou aléatoirement (on parle de mode asynchrone aléatoire) ;
- synchrone : tous les neurones sont mis à jour simultanément ;
- synchrone par bloc : on met à jour de façon synchrone des blocs de neurones.

On va à présent présenter quelques dynamiques d'évolution conçues pour résoudre des problèmes d'optimisation.

Le modèle ayant servi de base aux principaux algorithmes neuronaux d'optimisation est le modèle présenté par J. Hopfield et D. Tank dans l'article intitulé "Neural computation of decizions in optimization problems" (Biological Cybemetics, vol. 52, pages : 141-152, 1985). Ils définissent une fonction énergie E :

$$E = -\frac{1}{2}\sum_{i=1}^{n}\sum_{j=1}^{n} w_{ij} \cdot p_{ij} \cdot p_j - \sum_{i=1}^{n} I_i \cdot p_i \qquad (3)$$

Les sorties neuronales $p_i$ sont analogiques, comprises entre 0 et 1, et $I_i$ représente un biais d'entrée. Cette énergie peut être vue comme l'énergie physique d'un système de verres de spins. L'énergie E codant le problème, le problème revient à minimiser cette énergie à la convergence du réseau. J. Hopfield, dans un article intitulé "Neural networks and physical systems with emergent collective computational abilities" (proceedings of the National Academy of Sciences, vol. 79, pages 2554-2558, 1982) démontre (théorème de Hopfield) que:

- si la dynamique d'évolution du réseau est :

$$\Delta u_i(t) = -\frac{\Delta E}{\Delta p_i}(t)$$

- si la règle d'activation utilisée est celle de Mc Culloch-Pitts,
- et si la matrice des poids synaptiques est symétrique ($w_{ij}=w_{ji}$),
- alors, pour tout neurone $i$, et à toute date $t$ :

$$\frac{\Delta E}{\Delta t}(t)\leqq 0$$

Ainsi l'énergie va décroître, au cours de l'évolution du système, jusqu'à atteindre un minimum.

Dans l'art antérieur, l'opérateur ajuste des paramètres pour établir des compromis entre la satisfaction des contraintes et la maximisation de la taille.

Le procédé de l'invention permet de savoir si une solution est ou n'est pas en relation avec les autres. Cette connaissance garantit à la fois, la satisfaction de toutes les contraintes liées à l'application considérée et la maximisation de la taille.

L'objet de l'invention est de proposer un procédé et un dispositif d'extraction du plus grand sous-ensemble d'objets issus d'un ensemble d'objets en relation et deux à deux non en relation ou en relation qui peuvent avantageusement utiliser un réseau neuromimétique original.

Exposé de l'invention

L'invention concerne un procédé d'extraction d'un plus grand sous-ensemble d'objets, tels que des trajectoires potentielles dans une application de vélocimétrie, en utilisant un réseau de neurones caractérisé en ce qu'il comprend les étapes suivantes :
- une étape de construction d'un réseau de neurones récursif à partir des objets et des relations entre les objets en associant à chaque objet la sortie binaire d'un neurone formel $p_i(t)$ à une date $t$ :

$p_i(t)=1 \Rightarrow$ l'objet appartient au sous-ensemble recherché.

$p_i(t)=0 \Rightarrow$ l'objet n'appartient pas au sous-ensemble recherché ;
- une étape d'utilisation d'un procédé d'interruption afin d'obtenir des sous-ensembles d'objets deux à deux non en relation ou en relation tels que chaque sous-ensemble trouvé ne peut pas être inclus dans un plus grand, et que l'on passe d'un sous-ensemble à un autre en essayant d'augmenter sa taille ;
- une étape d'initialisation de la sortie et du potentiel de chaque neurone de telle sorte qu'ils vérifient, pour chaque neurone :

$$p_i(t) = 1 \Leftrightarrow u_i(t = 0)\geqq 0$$
$$p_i(t) = 0 \Leftrightarrow u_i(t = 1)\leqq 0$$

- une étape d'exploitation dynamique récursive du réseau ;
- une étape de choix parmi les sous-ensembles listés du plus grand par comparaison des tailles.

Avantageusement l'étape d'exploitation dynamique récursive du réseau comprend une mise à jour asynchrone (par exemple aléatoire ou séquentielle) de l'ensemble des neurones du réseau, en balayant les neurones les uns après les autres en appliquant à leur potentiel une correction préalablement calculée, correction dépendant des valeurs des sorties des autres neurones et des relations existant entre les objets de telle manière que globalement, après décodage des sorties des neurones, l'on obtient une liste de sous-ensembles d'objets deux à deux non en relation, chacun de ces sous-ensembles ne pouvant être inclus dans un plus grand.

L'invention concerne également un dispositif qui comporte un réseau de neurones qui comprend :
- une première mémoire table des sorties pi des neurones recevant la sortie d'un circuit de choix d'un entier allant de 1 à $N$ ;
- une seconde mémoire des relations entre objets ;
- une troisième mémoire table des potentiels des neurones reliée à la sortie du circuit de choix d'un entier ;

- une quatrième mémoire table des dernières variations des potentiels des neurones reliée à la sortie du circuit de choix d'un entier;
- un premier circuit de calcul permettant de calculer $A.p_i.T(\{p_j\})$ ;
- un second circuit de calcul permettant de calculer

$$B.(1 - p_i).S\left(\left\{p_j\right\}\right) ;$$

- un troisième circuit de calcul permettant de calculer $C.R(\{p_j\})$ ;

ces trois circuits de calculs étant reliés aux sorties des deux premières mémoires et à la sortie du circuit de choix d'un entier ;
- un dispositif d'interruption relié à la sortie du troisième circuit de calcul et aux sorties de la quatrième mémoire ;
- un premier additionneur recevant les sorties des deux premiers circuits de calcul et du dispositif d'interruption et relié à l'entrée de la quatrième mémoire ;
- un second additionneur recevant les sorties de la troisième mémoire et du premier additionneur et relié à l'entrée de la troisième mémoire ;
- un circuit de fonction de seuillage à sortie binaire recevant la sortie du second additionneur et relié à l'entrée de la première mémoire.

Avantageusement ce réseau de neurones s'applique :
- aux procédés de gestion optimale de moyens au cours du temps ;
- à la vélocimétrie ;
- à la résolution des problèmes de routage dans les réseaux de télécommunication ;
- à l'optimisation des communications entre satellites ;
- à l'optimisation de géométrie de disposition de composants dans la C.A.O ;
- à la planification des horaires de trains de vols ;
- à la planification de la production industrielle.

## Brève description des dessins

- La figure 1 illustre les différentes étapes du procédé de l'invention ;
- la figure 2 illustre l'étape d'exploitation dynamique récursive ;
- les figures 3 et 4 illustrent un neurone et un réseau de neurones associés au dispositif de mise en oeuvre du procédé de l'invention.

## Exposé détaillé de modes de réalisation

Le lexique situé en fin de description fait partie de la description. Pour faciliter la description, on présentera dans la suite le cas où l'on cherche des sous-ensembles deux à deux non en relation. Bien entendu le procédé de l'invention s'applique également à la recherche de sous-ensembles d'objets deux à deux en relation en substituant à la matrice $(e_{ij})$ des relations, la matrice $(1-e_{ij})$.

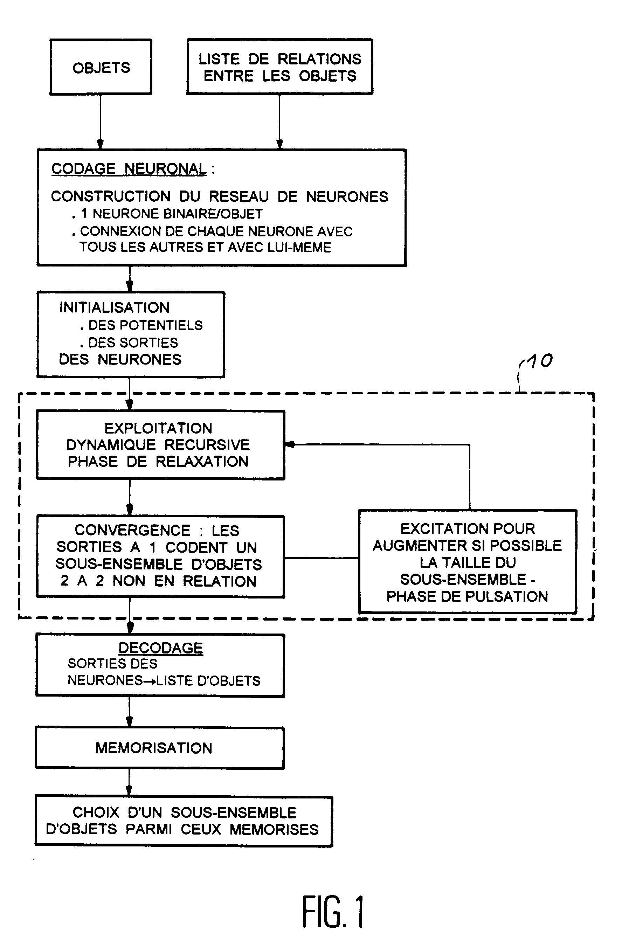

Le procédé de l'invention comprend plusieurs étapes, illustrées sur la figure 1.

On utilise un réseau de neurones formels et apte à déterminer un sous-ensemble d'objets deux à deux non en relation de qualité maximum, où la qualité est mesurée comme le nombre d'objets dans le sous-ensemble trouvé. On a les étapes suivantes :
- construction d'un réseau de neurones récursif à partir des objets et des relations entre les objets en associant à chaque objet la sortie binaire d'un neurone formel $p_i(t)$ :

$p_i(t)=1 \Rightarrow$ l'objet appartient au sous-ensemble recherché

$p_i(t)=0 \Rightarrow$ l'objet n'appartient pas au sous-ensemble recherché ;
- utilisation d'un procédé d'interruption afin d'obtenir des sous-ensembles d'objets deux à deux non en relation tels que chaque sous-ensemble trouvé ne peut pas être inclus dans un plus grand. On passe d'un sous-ensemble à un autre en essayant d'augmenter sa taille ;
- initialisation de la sortie (par exemple à 0) et du potentiel de chaque neurone de telle sorte qu'ils vérifient, pour chaque neurone $i$ :

$p_i(t) = 1 \Leftrightarrow u_i(t = 0) \geqq 0$

$p_i(t) = 0 \Leftrightarrow u_i(t = 1) \leqq 0$
- exploitation dynamique récursive du réseau : on réalise une mise à jour asynchrone (par exemple aléatoire ou séquentielle) de l'ensemble des neurones du réseau, en balayant les neurones les uns après les autres et en appliquant à leur potentiel une correction préalablement calculée, correction dépendant des valeurs des sorties des autres neurones et des relations existant entre les objets. A chaque fois que le réseau a convergé, on obtient après décodage des sorties des neurones un sous-ensemble d'objets deux à deux non en relation qui est mémorisé. Globalement, après décodage des sorties des neurones, on obtient une liste de sous-ensembles d'objets deux à deux non en relation, chacun de ces sous-ensembles ne pouvant être inclus dans un plus grand ;

- choix parmi les sous-ensembles listés du plus grand par comparaison des tailles.

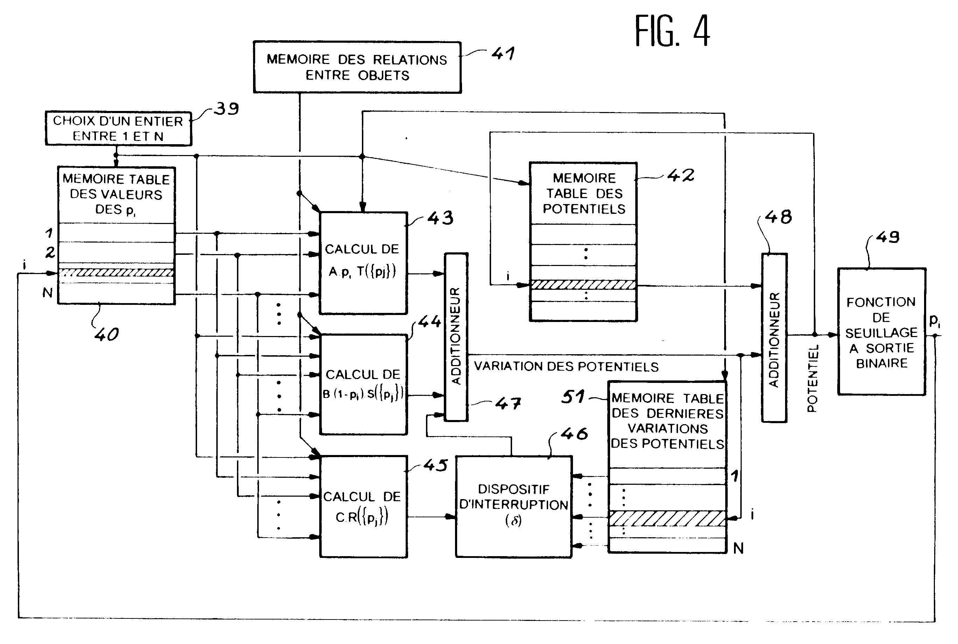

Le dispositif illustré à la figure 4 correspond au rectangle 10 en pointillés sur la figure 1.

Exploitation dynamique récursive de ce premier réseau de neurones.

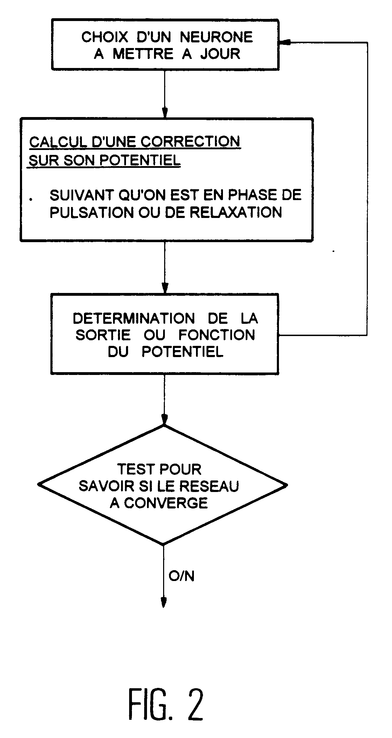

Cette exploitation dynamique récursive est illustrée à la figure 2.

On détermine la correction à appliquer au potentiel $u_i$ d'un neurone $i$ à une date $t$. Elle est donnée par une combinaison linéaire de deux termes :

- un terme a pour but d'inhiber le neurone i si celui-ci est activé et que l'objet associée est en relation avec au moins une des objets correspondant aux neurones activés à la date où il est considéré. Autrement dit, si la sortie $p_i$ du neurone $i$ à la date t vaut 1($p_i(t)$=1), alors cette correction est donnée par:

$$p_i(t) . T\left(\left\{p_j(t)\right\}\right)$$

où $T$ est une fonction des sorties $p_j(t)$ des neurones à la date $t$ qui correspondent à des objets en relation avec l'objet associé au neurone $i$. Par exemple :

$$T\left(\left\{p_j(t)\right\}\right) = -1 + h\left(\sum_{j=1}^{N} e_{ij} . p_j(t)\right)$$

avec N le nombre d'objet

$e_{ij}$=1 si les objets $i$ et $j$ sont en relation

$e_{ij}$=0 si les objets $i$ et $j$ ne sont pas en relation

$h: R \rightarrow \{0,1\}$

$x \rightarrow h(x)$=1 *si* $x$=0

= 0 *si* $x \neq 0$

ou :

$$T\left(\left\{p_j(t)\right\}\right) = -\left[\sum_{j=1}^{N} e_{ij} . p_j(t)\right] / \deg(i)$$

où $\deg(i)$ est le nombre d'objets avec lesquels l'objet $i$ est en relation ;

- un terme a pour but d'exciter le neurone si celui-ci est désactivé et que l'objet associé n'est pas en relation avec tous les objets correspondant aux neurones activés à la date où il est considéré. Autrement dit, si la sortie $P_i$ du neurone $i$ considéré vaut 0 à la date $t(p_i(t)$=0), alors cette correction est donnée par :

$$(1 - p_i(t)) . S\left(\left\{p_j(t)\right\}\right)$$

où $S$ est une fonction des sorties $p_j(t)$ des autres neurones à la date $t$ qui correspondent à des objets en relation avec l'objet associé au neurone $i$. Par exemple :

$$S\left(\left\{ p_j(t) \right\}\right) = h\left( \sum_{i=1}^{N} e_{ij} \cdot p_j(t) \right)$$

$h:/R \rightarrow \{0,1\}$      $/R$ étant l'ensemble des réels
$\qquad x \rightarrow h(x)=1$ *si* $x=0$
$\qquad\qquad = 0$ *si* $x \neq 0$

- ensuite, si le réseau a été mis à jour moins d'un certain nombre de fois préalablement fixé depuis la dernière convergence, alors on applique une excitation pour essayer d'augmenter, à la convergence suivante, la taille du sous-ensemble d'objet déterminé lors de la dernière convergence du réseau.

Autrement, un procédé d'interruption stoppe la prise en compte de cette excitation. Cette excitation peut s'écrire sous la forme :

$$\delta\left(\Delta u_1, \ldots, \Delta u_N, t\right) . R\left(\left\{ p_j(t) \right\}\right)$$

Par exemple :

$$\delta\left(\Delta u_1, \ldots, \Delta u_N, t\right) . \left(1 - p_i(t)\right) . \Lambda\left( N - \deg(i), \left\{ p_j(t) \right\}\right)$$

où:

$\delta$ retourne 1 si le réseau de neurones a été mis à jour moins d'un certain nombre de fois fixé depuis la dernière convergence,

$\Lambda$ retourne 1 si $N$-deg($i$) est supérieur à la plus grande taille des sous-ensembles d'objets trouvés jusqu'à la date $t$;

0 sinon.

Le réseau alterne donc des phases de pulsation (quand cette dernière excitation est prise en compte) et des phases de relaxation (quand le procédé d'interruption stoppe la prise en compte de l'excitation). Au cours de la phase de relaxation, le réseau converge. Une fois que le réseau a convergé, on applique à nouveau une excitation (phase de pulsation).

On alterne ainsi des phases de pulsation et de relaxation un certain nombre de fois, fixé par l'utilisateur (en fonction du temps qu'il a pour trouver une solution, de la qualité de la solution qu'il recherche). A l'issue de chaque phase de relaxation (à la convergence), les neurones dont la sortie vaut 1 codent un sous-ensemble d'objets deux à deux non en relation.

D'une façon générale, les équations de variation de potentiels peuvent s'écrire, pour tout i appartenant à $\{1,N\}$ :

$$\Delta u_i(t) = A \, p_i(t) . T\left(\left\{ p_j(t) \right\}\right) + B\left(1 - p_i(t)\right) . S\left(\left\{ p_j(t) \right\}\right) + C . \delta\left(\Delta u_1, \ldots, \Delta u_N, t\right) . R\left(\left\{ p_j(t) \right\}\right)$$

où $A$, $B$ et $C$ sont des réels positifs. Avantageusement, on prend $A=B=C=1$.

Avantageusement on borne le potentiel de chaque neurone entre deux valeurs fixées par l'utilisateur pour accélérer la convergence. Par exemple :
- on borne le potentiel entre des valeurs de l'ordre de grandeur des corrections à appliquer au potentiel quand le neurone est mis à jour ;
- on borne les valeurs des potentiels entre $-10^{-\infty}$ et $10^{-\infty}$: ainsi toute correction strictement négative à appliquer sur le potentiel d'un neurone activé le désactive, et toute correction strictement positive à appliquer sur le potentiel d'un neurone désactivé l'active.

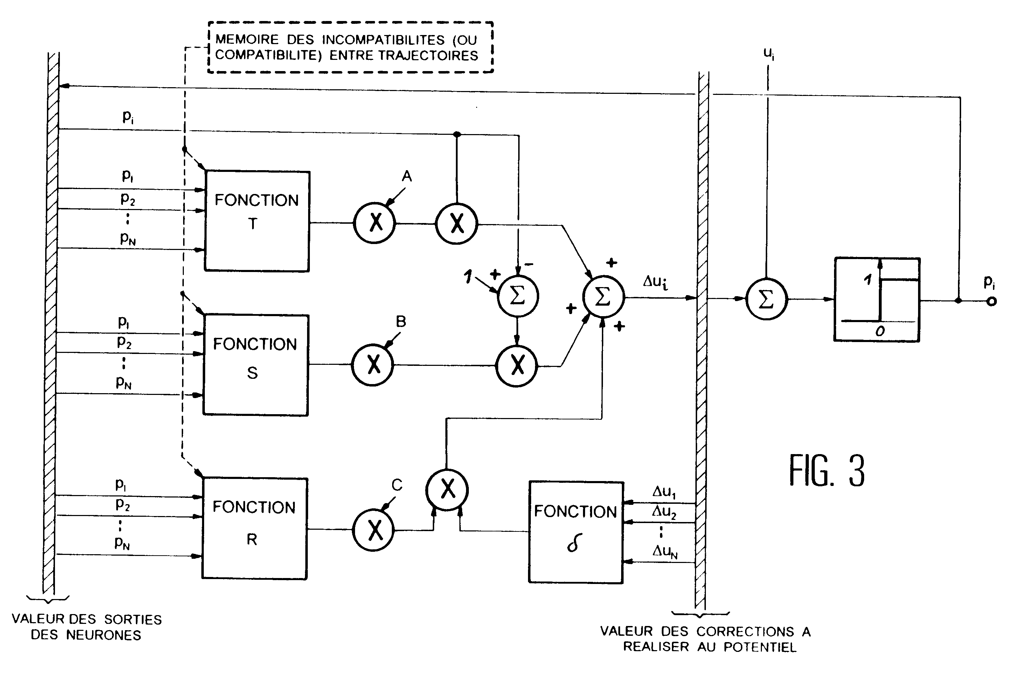

La figure 3 illustre un neurone $i$. La figure 4 donne le réseau de neurones associé au dispositif de mise en oeuvre du procédé de l'invention.

Ce réseau comprend :
- une première mémoire 40 table des valeurs des sorties $p_i$ des neurones recevant la sortie d'un circuit 39 de choix d'un entier allant de 1 à $N$;
- une seconde mémoire 41 des relations entre objets ;

- une troisième mémoire 42 table des potentiels des neurones ;
- une quatrième mémoire 51 table des dernières variations des potentiels des neurones ;
- un premier circuit de calcul 43 permettant de calculer $A.p_i.T(\{p_j\})$ ;
- un second circuit de calcul 44 permettant de calculer

$$B(1-p_i).S(\{p_j\}) \; ;$$

- un troisième circuit de calcul 45 permettant de calculer $C.R(\{p_j\})$;

ces trois circuits de calculs étant reliés aux sorties des deux premières mémoires ;

- un dispositif d'interruption 46 relié à la sortie du troisième circuit de calcul et aux sorties de la quatrième mémoire ;
- un premier additionneur 47 recevant les sorties des deux premiers circuits de calcul et du dispositif d'interruption ;
- un second additionneur 48 recevant les sorties de la troisième mémoire et du premier additionneur ;
- un circuit de fonction de seuillage à sortie binaire 49 recevant la sortie du second additionneur.

Dans le cas d'un dispositif numérique, ce réseau comprend également une horloge reliée à tous les éléments (directement ou indirectement) du dispositif.

Le réseau de neurones évolue en mode asynchrone : un neurone est mis à jour à la fois.

On peut démontrer qu'un réseau de neurones ainsi défini converge (c'est-à-dire qu'il existe une date $t$ pour laquelle $\forall i, \forall t'>t, \Delta u_i(t')=0$); en mode asynchrone à l'issue de chaque phase de relaxation et qu'à la convergence, les objets associés aux neurones activés sont deux à deux non en relation.

LEXIQUE

**Objet**

Trajectoire potentielle dans une application de vélocimétrie.

**Neurone**

Un neurone $i$ est défini par un potentiel $u_i$ et par une sortie binaire $p_i$. Quand, au cours de l'exploitation dynamique du réseau, le neurone est considéré à la date $t$, alors :
- on calcule une correction $\Delta u_i(t)$ à appliquer au potentiel $u_i(t+1)=u_i(t)+\Delta u_i(t)$ ;
- on met à jour la sortie :

       si $u_i(t+1)>0$       alors $p_i(t+1)=1$

       si $u_i(t+1)<0$       alors $p_i(t+1)=0$

neurone activé       $p_i=1$

neurone désactivé       $p_i=0$

**Relation**

Expression de l'incompatibilité de deux trajectoires potentielles dans une application de vélocimétrie.

On a un ensemble d'objets dont on cherche à extraire un sous-ensemble vérifiant une certaine propriété basée sur des relations entre les objets. Considérés deux par deux, il existe ou non une relation (issue d'une application) entre les objets.

Si un objet i est en relation avec un objet $j$, alors $e_{ij}=1$. Sinon $e_{ij}=0$.$(e_{ij})$ est la matrice des relations entre les objets.

Remarque: le procédé est équivalent à rechercher le plus grand sous-ensemble d'objets en relation. Il suffit pour cela de considérer la matrice en relation $(1-e_{ij})$ et d'utiliser le procédé décrit dans la présente invention.

**Revendications**

1. Procédé d'extraction d'un plus grand sous-ensemble d'objets, tels que des trajectoires potentielles dans une application de vélocimétrie, en utilisant un réseau de neurones, caractérisé en ce qu'il comprend les étapes suivantes :
- une étape de construction d'un réseau de neurones récursif à partir des objets et des relations entre les objets en associant à chaque objet la sortie binaire d'un neurone formel $p_i(t)$ à une date $t$ :

$p_i(t)=1\Rightarrow$ l'objet appartient au sous-ensemble recherché.

$p_i(t)=0\Rightarrow$ l'objet n'appartient pas au sous-ensemble recherché ;

- une étape d'utilisation d'un procédé d'interruption afin d'obtenir des sous-ensembles d'objets deux à deux non en relation ou en relation tels que chaque sous-ensemble trouvé ne peut pas être inclus dans un plus grand, et que l'on passe d'un sous-ensemble à un autre en essayant d'augmenter sa taille ;
- une étape d'initialisation de la sortie et du potentiel de chaque neurone de telle sorte qu'ils vérifient, pour chaque neurone :

$$p_i(t) = 1 \Leftrightarrow u_i(t = 0) \geqq 0$$
$$p_i(t) = 0 \Leftrightarrow u_i(t = 1) \leqq 0$$

- une étape d'exploitation dynamique récursive du réseau ;
- une étape de choix parmi les sous-ensembles listés du plus grand par comparaison des tailles.

2. Procédé selon la revendication 1, caractérisé en ce que l'étape d'exploitation dynamique récursive du réseau comprend une mise à jour asynchrone (par exemple aléatoire ou séquentielle) de l'ensemble des neurones du réseau, en balayant les neurones les uns après les autres en appliquant à leur potentiel une correction préalablement calculée, correction dépendant des valeurs des sorties des autres neurones et des relations existant entre les objets de telle manière que globalement, après décodage des sorties des neurones, l'on obtient une liste de sous-ensembles d'objets deux à deux non en relation ou en relation, chacun de ces sous-ensembles ne pouvant être inclus dans un plus grand.

3. Dispositif d'extraction d'un plus grand sous-ensemble d'objets, tels que des trajectoires potentielles dans une application de vélocimétrie, utilisant un réseau de neurones, caractérisé en ce que ce réseau de neurones qui comprend :
   - une première mémoire (40) table des sorties pi des neurones recevant la sortie d'un circuit (39) de choix d'un entier allant de 1 à $N$;
   - une seconde mémoire (41) des relations entre objets ;
   - une troisième mémoire (42) table des potentiels des neurones reliée à la sortie des circuits (39) de choix d'un entier ;
   - -une quatrième mémoire (51) table des dernières variations des potentiels des neurones reliée à la sortie du circuit (39) de choix d'un entier ;
   - un premier circuit de calcul (43) permettant de calculer $A.p_i.T(\{p_j\})$ ;
   - un second circuit de calcul (44) permettant de calculer

$$B.(1 - p_i).S(\{p_j\}) ;$$

   - un troisième circuit de calcul (45) permettant de calculer $C.R(\{p_j\})$;
   
   ces trois circuits de calculs étant reliés aux sorties des deux premières mémoires et à la sortie du circuit (39) de choix d'un entier ;
   - un dispositif d'interruption (46) relié à la sortie du troisième circuit de calcul et aux sorties de la quatrième mémoire ;
   - un premier additionneur (47) recevant les sorties des deux premiers circuits de calcul et du dispositif d'interruption et relié à l'entrée de la quatrième mémoire (39) ;
   - un second additionneur (48) recevant les sorties de la troisième mémoire et du premier additionneur et relié à l'entrée de la troisième mémoire ;
   - un circuit de fonction de seuillage à sortie binaire (49) recevant la sortie du second additionneur et relié à l'entrée de la première mémoire.

OBJETS

LISTE DE RELATIONS
ENTRE LES OBJETS

CODAGE NEURONAL :

CONSTRUCTION DU RESEAU DE NEURONES
. 1 NEURONE BINAIRE/OBJET
. CONNEXION DE CHAQUE NEURONE AVEC
TOUS LES AUTRES ET AVEC LUI-MEME

INITIALISATION
. DES POTENTIELS
. DES SORTIES
DES NEURONES

10

EXPLOITATION
DYNAMIQUE RECURSIVE
PHASE DE RELAXATION

CONVERGENCE : LES
SORTIES A 1 CODENT UN
SOUS-ENSEMBLE D'OBJETS
2 A 2 NON EN RELATION

EXCITATION POUR
AUGMENTER SI POSSIBLE
LA TAILLE DU
SOUS-ENSEMBLE -
PHASE DE PULSATION

DECODAGE
SORTIES DES
NEURONES→LISTE D'OBJETS

MEMORISATION

CHOIX D'UN SOUS-ENSEMBLE
D'OBJETS PARMI CEUX MEMORISES

FIG. 1

FIG. 2

FIG. 3

EP 0 681 245 A1

FIG. 4

MEMOIRE DES RELATIONS ENTRE OBJETS — 41

CHOIX D'UN ENTIER ENTRE 1 ET N — 39

MEMOIRE TABLE DES VALEURS DES $p_i$ — 40

1
2
i
N

MEMOIRE TABLE DES POTENTIELS — 42

i

CALCUL DE $A \cdot p_i \cdot T(\{p_j\})$ — 43

CALCUL DE $B \cdot (1-p_i) \cdot S(\{p_j\})$ — 44

CALCUL DE $C \cdot R(\{p_j\})$ — 45

ADDITIONNEUR — 47

VARIATION DES POTENTIELS

DISPOSITIF D'INTERRUPTION $(\delta)$ — 46

MEMOIRE TABLE DES DERNIERES VARIATIONS DES POTENTIELS — 51

1
i
N

ADDITIONNEUR — 48

POTENTIEL

FONCTION DE SEUILLAGE A SORTIE BINAIRE — 49

$p_i$

**EP 0 681 245 A1**

**Office européen des brevets**

**RAPPORT DE RECHERCHE EUROPEENNE**

Numero de la demande

EP 95 40 0959

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 226 092 (CHEN) 6 Juillet 1993 * colonne 10, ligne 62 - colonne 11, ligne 59; figure 6 * --- | 1,3 | G06F15/80 |
| A | EP-A-0 557 997 (HITACHI LTD) 1 Septembre 1993 * colonne 7, ligne 50 - colonne 8, ligne 20; figures 4,5 * --- | 3 | |
| A | IEEE TRANSACTIONS ON NEURAL NETWORKS, vol. 4, no. 6, Novembre 1993 NEW YORK US, pages 919-930, KARAKASOGLU 'Identification and decentralized adaptive control using dynamical neural networks with application to robotic manipulators' * abrégé * ----- | 1 | |

| | | | DOMAINES TECHNIQUES RECHERCHES (Int.Cl.6) |
|---|---|---|---|
| | | | G06F |

Le présent rapport a été établi pour toutes les revendications

| Lieu de la recherche | Date d'achèvement de la recherche | Examinateur |
|---|---|---|
| LA HAYE | 14 Juin 1995 | Schenkels, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13